# EUROPEAN PATENT APPLICATION

(11) **EP 2 551 809 A1**
(43) Date of publication of application: **30.01.2013**
(21) Application number: 12177628.0
(22) Date of filing: 24.07.2012
(51) Int. Cl.: G06Q 10/06, G07C 11/00

(54) **System and method of measuring time intervals to deliver a service**

(30) Priority: 27.07.2011 US 201113192288
(71) Applicant: Honeywell International Inc., Morristown, NJ 07962-2245 (US)
(72) Inventor: Lin, Yunting, Morristown, NJ New Jersey 07962-2245 (US); Brodsky, Tomas, Morristown, NJ New Jersey 07962-2245 (US)
(74) Representative: Houghton, Mark Phillip

(57) **Abstract**

A system and method of measuring order fulfillment times for fast food incorporate video cameras to generate sequences of images of the fulfillment process. Time intervals to fulfillment are determined and stored. Average time intervals to fulfillment, based on multiple fulfillment records, are automatically generated.

## Description

### FIELD

The application pertains to systems and methods of automatically measuring order fulfillment time intervals. More particularly, systems and methods are provided for establishing indicia of average order fulfillment times in the context of a fast food restaurant.

### BACKGROUND

Measuring service time intervals in a quick service restaurant (QSR) has been of great interest for the retailer in order to improve the speed of service, measure staff performance as well as identify staff training needs. Service time is defined as the time interval between when a customer places an order, and the time the customer receives the ordered, food for example. For a QSR, there are usually outdoor (drive-through) and indoor (restaurant) service time intervalsthat need to be measured.

Traditionally, outdoor (drive-through) service time intervals can be measured by detecting vehicles going through each drive-through service area. The most widely adapted method uses magnetic loops or infrared beams to detect the vehicle's presence at various service points. The system then logs the time when the vehicle passed through each service point in the drive-through to compute a respective service time interval.

A well-known product is HME ZOOM Drive-Thru Optimization System. However, the system cannot tell if the timer measurements are indeed for the same vehicle or if the customer failed to receive food at the pickup window and had to pull aside to wait for order completion.

Recently, video based systems have emerged in industry. Such systems match the same vehicle from each service point to the next in order to have better measurements of drive-through service time.

Regardless of the success of the drive-through timer systems, they cannot be used to measure service time inside the restaurant for various reasons. For example, people do not move along a designated path in a restaurant, and, it is impossible to track each customer's movement using vehicle tracking technology. There appears to be no system today that can automatically measure service time intervals inside the restaurant due to the complexity of customer movement under various scenarios.

Known point of sale (POS) systems log all transactions at the cash register. This establishes a start time of the fulfillment time interval, but, will not establish a food, or product pick-up time. The detection of time of subsequent food pickup by the customer and determining when each order is fulfilled is extremely complex. For instance, a customer may first receive a partial order, and pick up the rest of the order later. Or, the customer may pick up the food, go sit down at the table, and then go back to the service counter to ask for condiments or cups. Do the condiments count as part of the order?

Even if the definition of order fulfillment, for example food delivery, can be agreed upon, in order to measure the service time intervals accurately, each customer's movement and actions must be tracked throughout the restaurant. The system must be able to identify the item that was delivered to the customer to determine if it is part of the order or not. This poses an extremely challenging problem that cannot be fully solved without full video coverage inside the restaurant. Such video coverage includes high resolution video cameras with fields of view directed to service counters, as well as highly accurate multi-camera customer tracking and object recognition processing, or capabilities.

Currently, there appears to be no prior art in the industry for measuring restaurant service time intervals automatically. The known method that is used relies on humans entering indicators into the system to indicate that a particular customer or table has been served. The existing state-of-the-art requires the server to keep track of the status of the service and update the status manually in the system.

### BRIEF DESCRIPTION OF THE DRAWINGS

Fig. 1 is a block diagram of a system in accordance herewith;

Fig. 2 illustrates order fulfillment in a fast food context;

Fig. 3 is a flow diagram of a method in accordance herewith; and

Fig. 4 is a flow diagram of an alternate method in accordance herewith.

### DETAILED DESCRIPTION

While disclosed embodiments can take many different forms, specific embodiments thereof are shown in the drawings and will be described herein in detail with the understanding that the present disclosure is to be considered as an exemplification of the principles thereof as well as the best mode of practicing same, and is not intended to limit the application or claims to the specific embodiment illustrated.

In one aspect hereof, estimates of "average" service time intervals can be developed. In accordance with the present system and method, the need to track individual customer's movement to estimate individual service time intervals can be eliminated. The matching between making an order for a food product to the food pickup/delivery can in fact become arbitrary, provided that a group of customer orders corresponds, matches, to a group of food pickups, or, deliveries. The estimated average service time intervals based on various actual time intervals will be the same regardless of the order of matching.

While the present system and method estimate the "average" service time interval inside a QSR, the same technique can be applied to any other store with a similar flow. That is, where a customer places an order that is logged into a POS system, and, then moves aside to wait for order delivery at the service counter. In accordance herewith, the system will automatically detect video events related to food delivery or food pickup at the service counter. Combined with the transaction data from the POS system, the system will provide an estimate of average service time interval over time.

As discussed below, a video based system monitors the service counter area and detects food delivery events. A food delivery event occurs when an employee hands off a food tray, a bag, a cup of beverage or a condiment item to the customer. The customer may be present at the counter or the employee may simply place down the food item on the service counter for the customer to pick up.

The provider's, for example the restaurant's, POS system provides transaction initiation data based on timestamps. It is time synchronized to the video system. The number of POS transactions does not necessarily match the number of food delivery events. In fact, in most cases they do not match at all given that each transaction is typically involved with multiple food delivery events. The present system will cluster the food delivery events, find mappings between each POS transaction and each cluster of food delivery events, and then establish an average service time based on such mappings.

Several assumptions are associated with the process:
1. The food delivery events can only take place after the corresponding POS transaction has already taken place (as the customer must place the order first before the order can be fulfilled).
2. There may be more than one food delivery event per POS transaction.
3. In rare cases, there may be no food delivery event for a POS transaction. This can happen when the food delivery happens outside of the monitored service counter area, or the system fails to detect the food delivery event.
4. Some food delivery events may be false alarms and therefore it is allowed if a food delivery event is left unclustered.

In another aspect, the food delivery events in the video are clustered into multiple clusters, where each cluster maps to a POS transaction. The time constraint which requires the food be delivered only after the order has been placed is in accordance with the business model of fast food and similar businesses. After the mapping is established, the time of service can be measured using the cluster mean, median or [min, max] depending on which measurement method is preferred by the user.

Advantageously, the present system and method detect specific events in the video that demonstrate food delivery activities. Without marking explicitly which food delivery event corresponds to which specific customer, these video events can be clustered automatically, and,average service time intervals can be reliably determined.

To detect the food delivery events in the video, a video camera is oriented so that its field of view extends over, or includes over a service counter of a respective business to detect several types of activities: For example, and without limitation:
- the presence of an employee at the counter
- hand movements of an employee when food tray or food item is delivered
- presence of a customer at the opposite side of the counter
- recognition of items handed off or placed on the counter by the employee.

Once these food delivery events are detected, the system performs a pre-processing step to filter out those that do not appear to be valid. For example:
- Only employee activities are present but no customer pickup.
- Unusual hand movement that does not match the movement pattern of food delivery, such as counting or organizing inventory items during non-rush hours.
- Events that took place outside of expected food delivery time frame (e.g. more than 7 minutes after any POS transaction, as determined empirically).

After the filtering process, the system can apply a segmentation algorithm to partition the event data streams into segments given that the food delivery events that take place more than the assumed seven minutes after the POS transaction cannot belong to the matching cluster. This enables the clustering and mapping algorithms to deal with a smaller set of data at one time. It also allows the system to output updated average service time periodically.

The clustering and mapping algorithms will then be applied to group events into clusters, and test the mapping from the cluster to the POS transaction. Such mapping can be assumed to go chronologically given that the customer who ordered food first is likely to receive the food first. Also, since the goal is to determine average service time instead of individual service times, even if an order is matched incorrectly, the average service time interval estimate will remain unaffected.

One clustering approach is based on recursive K-means clustering. Initial clustering is performed using a standard K-means algorithm. The resulting mapping is evaluated to check if the time constraint is met. If not, then re-clustering of subsets of data is performed. Thisrepeats recursively until all mappings meet the assumed time constraint. If the stream of POS transaction data has a similar pattern as the stream of food delivery events, then it is expected that the clustering based on time proximity can work well and can find reasonable mapping results for reliable average service time estimates. From the real-world POS transaction and video data, it is clear that the two streams of data have a similar pattern, although with different density (or number of events) and the streams are time shifted in nature (as the food delivery events only happen after the order was placed).

In another embodiment, the time constraints are first applied. Then a dynamic programming based approach can be used along with an optimization function to find the best clustering structures that minimize the cost function. The cost function can be based on minimum service time (given that customer who ordered first is likely to receive food first), maximum inter-cluster distance (given that the repeated food delivery events are likely to fulfill the same order), or some other criteria.

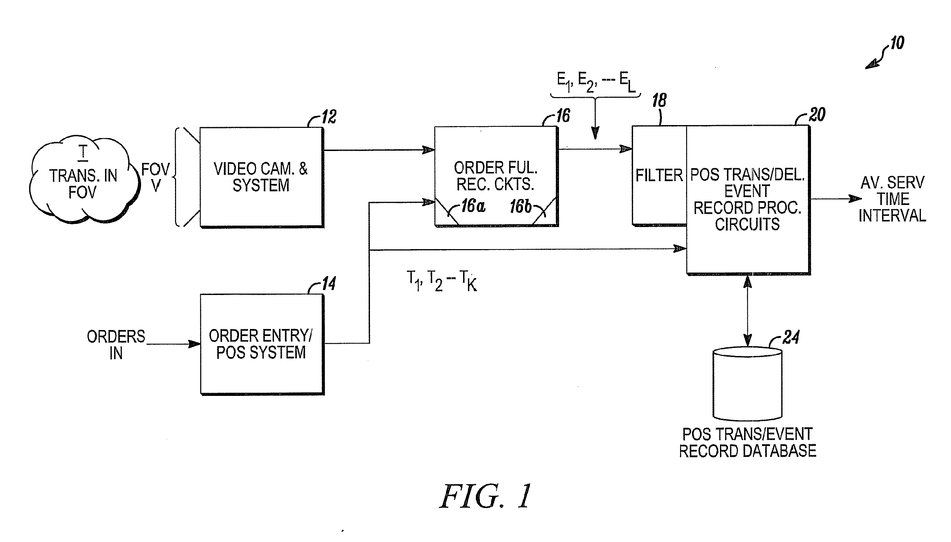

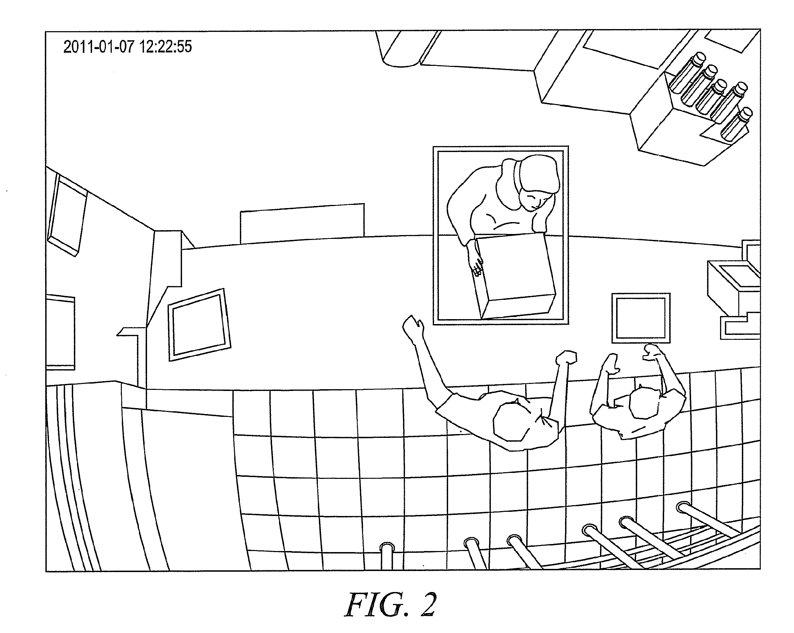

Fig. 1 is a block diagram of an exemplary apparatus 10. Apparatus 10 includes one or more video cameras and associated video processing systems 12. The cameras have respective fields of view V which cover a transaction location T. For example, a portion of a counter of a fast food restaurant, as illustrated in Fig. 2.

A POS system 14 has one or more terminals associated with the transaction location T. The time of initiation of the transaction can be logged by the POS system 14 when the customer's order is taken. As is illustrated in Fig. 2, the time of delivery can be recorded in response to order fulfillment, such as delivery of the order.

Outputs from the video camera(s) and system 12, and the POS system 14 can be coupled to order fulfillment recognition circuits 16. Information pertaining to recognized order fulfillment events, and associated times, can be coupled to pre-processing filter circuits 18.

Outputs from filter 18 can be coupled to record processing circuits 20 which, as discussed below, can arrive at a determination of average fulfillment times. Fulfillment records can be stored in a database 24.

Those of skill will understand that the order fulfillment recognition circuits 16 can be implemented, at least in part with one or more programmable processors 16a in combination with executable control software 16b pre-stored in read-only-memory, programmable read-only-memory units, or read-write memory units, such as semi-conductor, magnetic or optical storage units. Alternately, hard wired circuitry could be used to implement some or all of the circuits 16, without limitation. Similar comments apply to the filter circuitry 18 and record processing circuits 20. The exact details of such implementations are not limitations of the claims hereof.

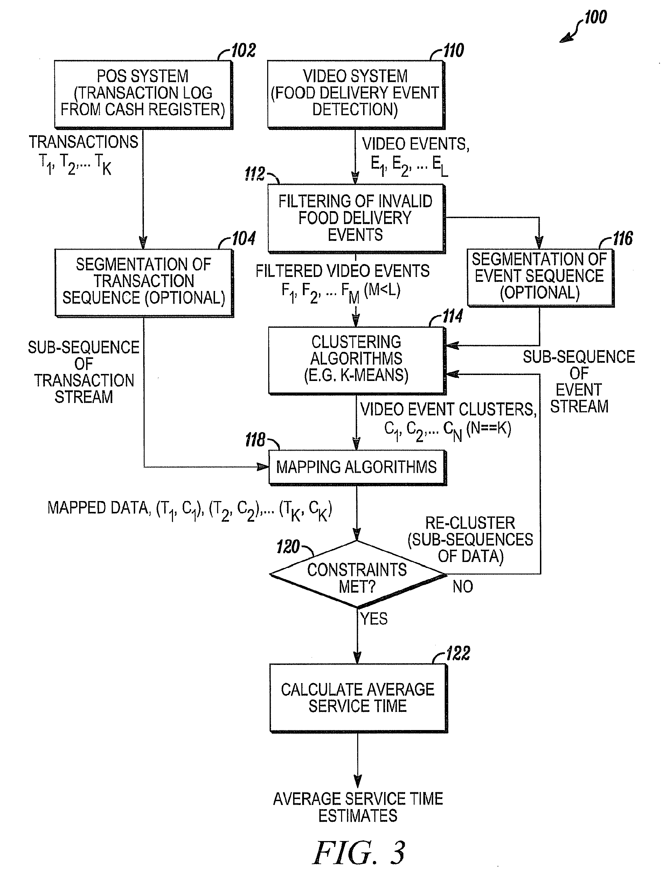

Fig. 3 illustrates a method 100 of operating the system 10. One or more orders T1, T2...Tk can be logged into the POS, as is the usual case with fast food restaurants, as at 102. Optional segmentation of the transaction sequence can be carried out, as at 104.

The video system 12 can detect the food delivery event(s) E1, E2...El, as at 110. Invalid events can be filtered out of the sequence, as at 112, by the filter 18. The filtered video events can be clustered, as at 114. Optional segmentation of the event sequence can be under taken as at 116.

The transaction sequence can be mapped to the event clusters, as at 118 thereby producing mapped data. Constraints can be applied, as at 120 to the mapped data, and if the constraints are met, the average service time can be determined, as at 122. The determined average service time can be provided in real-time, on line or output as one or more electronic or printed reports.

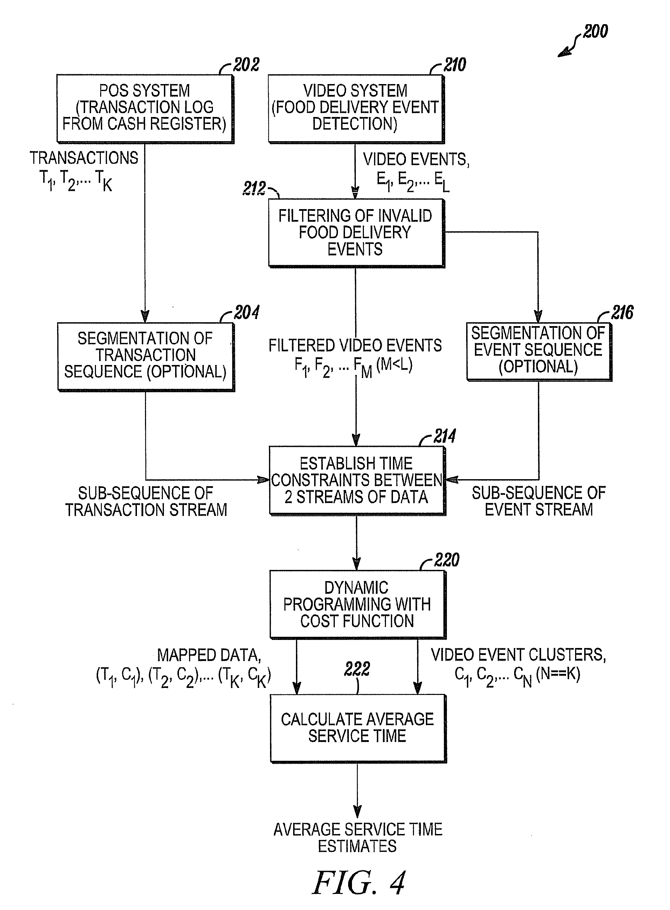

Fig. 4 illustrates an alternate method 200 of operating the system 10. One or more orders T1, T2...Tk can be logged into the POS, as is the usual case with fast food restaurants, as at 202. Optional segmentation of the transaction sequence can be carried out, as at 204.

The video system 12 can detect the food delivery event(s) E1, E2...El, as at 110. Invalid events can be filtered out of the sequence, as at 212, by the filter 18. The filtered video events can be combined with some or all of the transaction stream to establish time constraints between the transaction stream and the stream of video events as at 214. Optional segmentation of the event sequence can be undertaken as at 216.

A dynamic programming approach can be used to process the streams of data as at 220, along with a pre-selected optimizing function to find the preferred clustering structures that minimize, for example, a cost function. The average service time can be determined, as at 222. The determined average service time can be provided in real-time, on line or output as one or more electronic or printed reports.

From the foregoing, it will be observed that numerous variations and modifications may be effected without departing from the spirit and scope of the invention. It is to be understood that no limitation with respect to the specific apparatus illustrated herein is intended or should be inferred. It is, of course, intended to cover by the appended claims all such modifications as fall within the scope of the claims. Further, logic flows depicted in the figures do not require the particular order shown, or sequential order, to achieve desirable results. Other steps may be provided, or steps may be eliminated, from the described flows, and other components may be add to, or removed from the described embodiments.

## Claims

1. An apparatus comprising:
a video camera;
a point of sale system to receive and record a transaction;
circuits coupled to the camera that detect transaction fulfillment events; and
circuits to process transaction fulfillment event records to automatically establish indicia of fulfillment time intervals.

2. An apparatus as in claim 1 where the circuits that detect transaction fulfillment detect delivery of a product.

3. An apparatus as in claim 1 which includes pre-processor circuits to reject events which do not comprise delivery of a product, or, which take place after a predetermined time interval has passed.

4. An apparatus as in claim 1 including a storage element which stores a data base of fulfillment records.

5. An apparatus as in claim 1 where the circuits to process include circuits to partition selected of the fulfillment records into segments.

6. An apparatus as in claim 5 which includes circuits to cluster the segments.

7. An apparatus as in claim 6 where the circuits to process automatically establish average fulfillment time intervals.

8. An apparatus as in claim 7 where the circuitry provides updated average fulfillment time intervals.

9. An order fulfillment delivery interval estimating system comprising:
a video camera;
a point of sale system to receive and record a transaction;
information pertaining to previously detected and stored fulfillment delivery intervals; and
circuitry coupled to the camera, the system and the information to automatically establish an average fulfillment delivery interval, responsive at least to the stored intervals.

10. An estimating system as in claim 9 where the circuitry carries out pre-processing of fulfillment delivery interval records and which excludes those that are inconsistent with predetermined criteria and which includes circuitry to cluster filtered video events.

11. An estimating system as in claim 9 where the circuitry includes a programmable processor and pre-stored, executable instructions to, when executed by the processor, automatically establish the average fulfillment delivery interval.

12. An estimating system as in claim 10 where the circuitry maps transaction sequences with sequences of clustered video events.

13. A method comprising:
directing a ield of view of a video camera system to a product delivery region;
entering the orders into a point-of-sale system;
accumulating a plurality of product receipt intervals; and
responsive to the accumulating, and the entering, automatically establishing an average fulfillment interval.

14. A method as in claim 13 which includes, providing sequences of video images of an order delivery region, and where the accumulating is responsive to sequences of video images.

15. A method as in claim 14 which includes storing in one of a magnetic storage system, an optical storage system, or a semiconductor storage system, records of the fulfillment intervals.
